# FASCICULE DE BREVET EUROPEEN

(11) **EP 3 907 411 B1**
(45) Date de publication et mention de la délivrance du brevet: **28.09.2022**
(21) Numéro de dépôt: 21168609.2
(22) Date de dépôt: 15.04.2021
(51) Int. Cl.: F16B 5/06, F16B 21/12, F24S 25/632, F16B 21/14, F16B 3/04

(54) **GOUPILLE**
STIFT
PIN

(30) Priorité: 06.05.2020 US 202063020856 P; 12.05.2020 FR 2004660
(43) Date de publication de la demande: 10.11.2021
(73) Titulaire: A. Raymond et Cie, 38000 Grenoble (FR)
(72) Inventeur: FRIEDRICH, Christian, LOS OSOS, 93402 (US); LE GALL, Antoine, 38600 FONTAINE (FR)
(74) Mandataire: IP Trust

(56) Documents cités:
- EP-A2- 0 458 126
- DE-C1- 3 518 866
- GB-A- 264 933
- US-A- 4 922 587
- US-A1- 2011 100 435

## Description

### DOMAINE DE L'INVENTION

La présente invention concerne une goupille, notamment pour retenir des éléments dans un rail. Elle trouve plus particulièrement son application pour fixer le cadre d'un module photovoltaïque dans un rail d'une structure porteuse.

### ARRIERE PLAN TECHNOLOGIQUE DE L'INVENTION

Actuellement, plus de 90% des modules photovoltaïques comprennent un cadre en aluminium permettant de rigidifier les modules fabriqués à partir d'un assemblage d'une plaque de verre en face avant (exposée au soleil) et d'une feuille de matière plastique (Tedlar^{®}) en face arrière. Un autre avantage d'un tel cadre métallique est de faciliter la fixation mécanique d'un module photovoltaïque sur le rail métallique, généralement en acier, d'une structure porteuse. La structure porteuse peut par exemple être destinée à être fixée sur le toit d'une habitation.

Lors de la fixation du cadre métallique du module photovoltaïque sur le rail de la structure porteuse, il doit être tenu compte du fait qu'une fois installé, le module peut être soumis à de fortes sollicitations, par exemple par les efforts exercés par le vent, notamment d'arrachement du module hors du rail, tendant à désolidariser le cadre du module de la structure porteuse. Quelles que soient les conditions auxquelles est soumis un module, il est nécessaire d'empêcher que le cadre ne se détache de la structure porteuse et ne s'envole. Il est également nécessaire de conserver un contact électrique ininterrompu entre le module et la structure porteuse, afin de maintenir l'ensemble à une masse électrique.

Les contraintes sont d'autant plus importantes à prendre en compte lorsque la structure porteuse est associée à un dispositif mobile permettant d'orienter de manière optimale les modules photovoltaïques en fonction de la position du soleil, ou de toute autre circonstance. En particulier, l'inclinaison des modules provoque leur fléchissement, qui induit des contraintes notables sur le dispositif de fixation du module au rail dans la direction orthogonale à la direction d'arrachement, ce qui peut provoquer le glissement du dispositif de fixation et son désengagement, et donc entraîner la désolidarisation du module et de la structure porteuse.

On connaît du document GB264933 des clous, agrafes, pointes, crochets, attaches, broches fabriqués ou découpés dans des feuilles ou bandes de métal. Ces pièces présentent une partie de tige pliée ou courbée dans le sens de leur longueur et de manière à ce qu'après le pliage, la courbure ou le cintrage, elles aient une section transversale en « S », en « U », en «V », en « C », ou encore à toute autre forme courbe ou angulaire en section transversale. Les pièces d'attache proposées par ce document ne sont nullement adaptées pour fixer le cadre d'un module photovoltaïque dans un rail d'une structure porteuse.

### OBJET DE L'INVENTION

La présente invention vise à résoudre au moins en partie les problématiques précitées, en proposant une solution permettant notamment une fixation simple et rapide d'éléments dans un rail, afin de former un assemblage présentant une forte résistance aux différentes contraintes et sollicitations précitées et qui permette de maintenir un contact électrique continu entre les éléments et le rail.

### BREVE DESCRIPTION DE L'INVENTION

En vue de la réalisation de ce but, l'objet de l'invention propose une goupille comportant un corps métallique s'étendant selon un axe longitudinal (Ox) d'insertion et présentant une première et une seconde extrémité selon l'axe longitudinal (Ox), une face supérieure et une face inférieure opposée à la face supérieure. La goupille comprend :
- deux portions convexes présentant chacune une paroi intérieure inclinée et une paroi extérieure inclinée, les parois inclinées de chaque portion convexe formant une crête et s'étendant selon l'axe longitudinal, au moins une crête présentant sur sa face inférieure une lame saillante obtenue par découpage et pliage du corps métallique selon l'axe longitudinal ;
- une portion concave reliant les parois intérieures de chaque portion convexe par une surface centrale;
- au moins un organe de blocage.

Selon d'autres caractéristiques avantageuses et non limitatives de l'invention, prises seules ou selon toute combinaison techniquement réalisable :
- chaque paroi extérieure se poursuit selon un axe transversal (Oz) par une aile sensiblement parallèle à la surface centrale ;
- au moins une aile présente un épaulement selon l'axe transversal (Oz), l'épaulement étant situé entre la seconde extrémité et l'au moins un organe de blocage ;
- l'au moins un organe de blocage est formé d'une arête saillante à la face supérieure, obtenue par découpage et pliage du corps métallique selon un axe transversal (Oz) ;
- l'au moins un organe de blocage est formé par un ergot s'étendant vers l'extérieur selon un axe transversal (Oz) ;
- l'ergot est replié vers la face inférieure ;
- la goupille comprend un organe de blocage sur chaque aile, les organes de blocage étant alignés sur un axe transversal (Oz) ;
- l'au moins un organe de blocage est formé d'une arête saillante à la paroi extérieure inclinée, obtenue par découpage et pliage du corps métallique ;
- la goupille comprend au moins une lame saillante sur la crête de chaque portion convexe ;
- la goupille comprend deux lames saillantes alignées selon l'axe longitudinal (Ox) sur la crête de chaque portion convexe ;
- la goupille comprend exactement une lame saillante sur la crête de chaque portion convexe, les lames saillantes étant décalées l'une par rapport à l'autre selon l'axe longitudinal (Ox) ;
- chaque crête présente un plateau, chaque lame saillante étant découpée dans une partie seulement de la largeur selon un axe transversal (Oz) du plateau ;
- la première extrémité présentant une forme biseautée ;
- la goupille comprend un cran anti-retour formé sur la face inférieure ou sur la face supérieure ;
- le corps métallique est constitué d'acier trempé ;
- chaque paroi est percée d'un trou en vis-à-vis les uns des autres selon un axe transversal, les trous étant disposés entre la première extrémité et la au moins une lame saillante, l'au moins un organe de blocage comprenant une tige apte à traverser l'ensemble des trous ;

L'invention porte également sur l'utilisation d'une goupille telle que présentée ci-dessus pour retenir deux éléments dans un rail en U s'étendant selon un axe transversal (Oz), le rail présentant un côté horizontal fermé, un côté horizontal ouvert pour recevoir les éléments dans une position de retenue et deux parois latérales prolongées à l'opposé du côté fermé par une paroi horizontale s'étendant vers l'extérieur du rail suivant l'axe longitudinal (Ox), chaque paroi latérale étant percée d'une ouverture en vis-à-vis l'une de l'autre suivant l'axe longitudinal (Ox), chaque ouverture s'étendant en partie sur la paroi horizontale, chaque élément présentant un passage traversant se trouvant en vis-à-vis des ouvertures lorsque l'élément est dans la position de retenue, de telle sorte que la goupille soit insérée suivant l'axe longitudinal (Ox) dans les ouvertures et passages traversants jusqu'à une position d'assemblage dans laquelle la au moins une lame saillante et l'au moins un organe de blocage aient traversé au moins une première ouverture du rail, la au moins une lame saillante entrant en contact forcé avec les éléments, l'au moins un organe de blocage formant une butée contre le rail pour empêcher l'extraction de la goupille.

L'invention porte également sur l'utilisation d'une goupille telle que présentée ci-dessus pour retenir deux éléments dans un rail en U s'étendant selon un axe transversal (Oz), le rail présentant un côté horizontal fermé, un côté horizontal ouvert pour recevoir les éléments dans une position de retenue et deux parois latérales prolongées à l'opposé du côté fermé par une paroi horizontale s'étendant vers l'extérieur du rail suivant l'axe longitudinal (Ox), chaque paroi latérale étant percée d'une ouverture en vis-à-vis l'une de l'autre suivant l'axe longitudinal (Ox), chaque ouverture s'étendant en partie sur la paroi horizontale, chaque élément présentant un passage traversant se trouvant en vis-à-vis des ouvertures lorsque l'élément est dans la position de retenue, de telle sorte que la goupille soit insérée suivant l'axe longitudinal (Ox) dans les ouvertures et passages traversants jusqu'à une position d'assemblage dans laquelle la au moins une lame saillante et les trous aient traversé une seconde ouverture du rail, la au moins une lame saillabte entrant en contact forcé avec les éléments, l'au moins un organe de blocage étant inséré dans les trous pour empêcher l'extraction de la goupille.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]
[Fig. 1b]
[Fig. 1c]

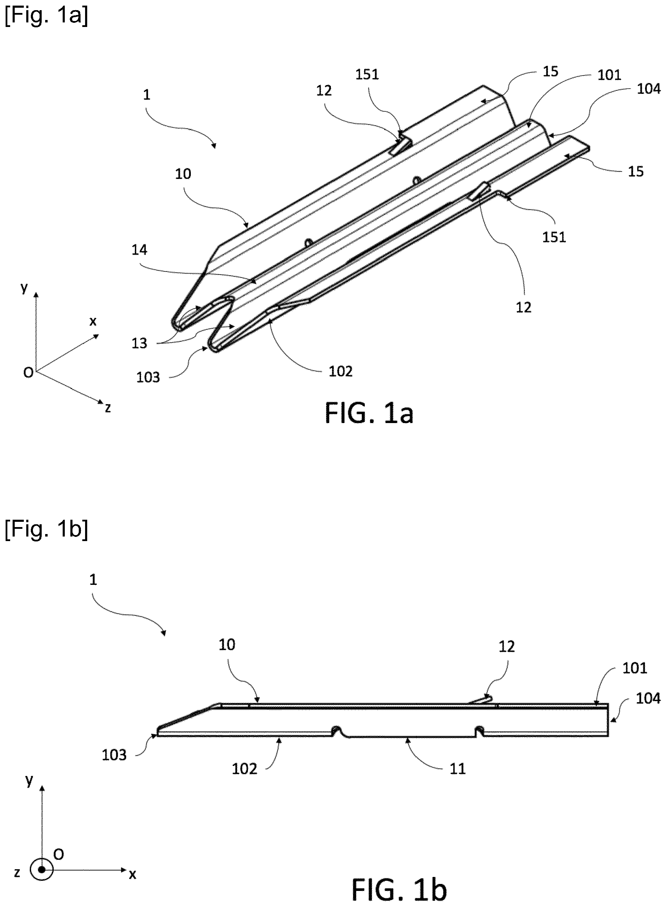

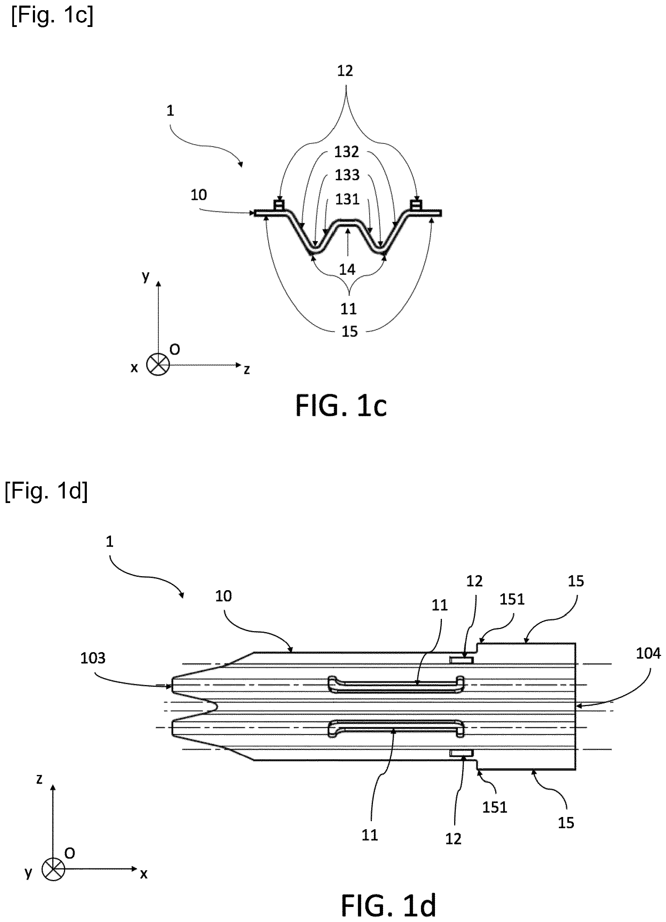

[Fig. 1d] Les figures la à 1d représentent respectivement une vue isométrique, une vue latérale selon un plan orthogonal à l'axe transversal, une vue latérale selon un plan orthogonal à l'axe longitudinal et une vue du dessous d'une goupille conforme à un premier mode de mise en œuvre de l'invention.
[Fig. 2a]
[Fig. 2b]
[Fig. 2c]
[Fig. 2d] Les figures 2a à 2d représentent respectivement une vue isométrique, une vue latérale selon un plan orthogonal à l'axe transversal, une vue latérale selon un plan orthogonal à l'axe longitudinal et une vue du dessous d'une goupille conforme à un deuxième mode de mise en œuvre de l'invention.
[Fig. 3] La figure 3 représente une vue en coupe d'un assemblage utilisant une goupille conforme à un premier mode de mise en œuvre de l'invention.

### DESCRIPTION DETAILLEE DE L'INVENTION

Par souci de simplification de la description à venir, les mêmes références sont utilisées pour des éléments identiques ou assurant la même fonction dans les différents modes de mise en œuvre de l'invention.

D'une manière générale, l'invention porte sur une goupille permettant de retenir deux éléments tels que les cadres métalliques d'un module photovoltaïque dans un rail en U, par exemple le rail d'une structure porteuse métallique. Pour ce faire, la goupille est destinée à être insérée selon un axe longitudinal d'insertion dans des ouvertures aménagées dans des parois latérales du rail et dans un passage traversant de chaque élément. Cet assemblage permet d'une part de fixer les cadres dans le rail de la structure, et d'autre part de maintenir un contact électrique continu entre le module photovoltaïque et la structure porteuse.

### Structure générale de la goupille

Les figures la à 1d et 2a à 2d représentent différentes vues de deux modes de mise à œuvre d'une goupille conforme à l'invention. Un repère orthogonal Oxyz y est représenté, comprenant un axe longitudinal (Ox), un axe vertical (Oy) et un axe transversal (Oz).

D'une manière générale, une telle goupille 1 comprend un corps métallique 10 s'étendant selon un axe longitudinal d'insertion (Ox). Le corps métallique 10 présente une face supérieure 101 et une face inférieure 102 opposée à la face supérieure 102. Le corps métallique 10 présente également une première extrémité 103 et une seconde extrémité 104 selon l'axe longitudinal (Ox).

Le corps métallique 10 est constitué d'une bande métallique découpée puis pliée, par exemple par emboutissage au moyen d'une machine à suivre.

Le matériau du corps métallique 10 est avantageusement de l'acier trempé, dont la forme est modelée à froid avant de réaliser une trempe thermique à 800°C par exemple. L'acier peut ensuite être protégé contre la corrosion par une étape de traitement de surface. Le choix d'un tel matériau est particulièrement avantageux en ce qu'il permet un modelage aisé avant trempage, puis, après trempage, une résistance mécanique et une élasticité importantes.

D'une manière générale, la goupille 1 présente une section en coupe dans un plan orthogonal à l'axe longitudinal (Ox) en forme de W lorsque la face supérieure est tournée vers le haut.

Cette forme confère à la goupille 1 une souplesse tout en minimisant la quantité de matière requise. Cette forme permet notamment d'avoir une souplesse plus importante qu'une pièce rectangulaire ou en forme de U.

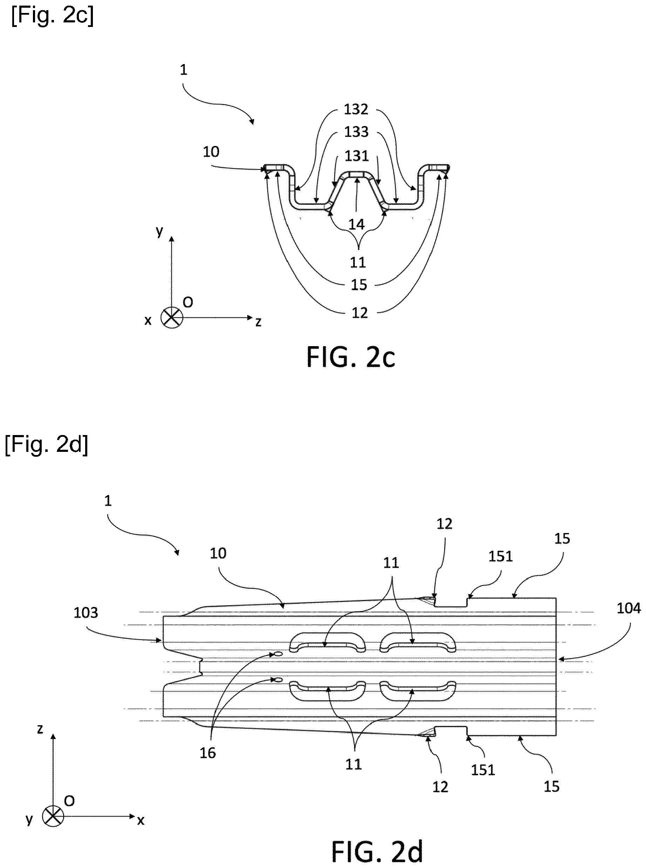

Plus particulièrement, et tel que cela est visible notamment sur les figures 1c et 2c, la goupille 1 comprend deux portions convexes 13 présentent chacune une paroi intérieure inclinée 131 et une paroi extérieure inclinée 132. Les parois inclinées de chaque portion convexe forment une crête 133 orientée vers le bas et s'étendant horizontalement selon l'axe longitudinal (Ox). Les deux crêtes se trouvent dans un même plan horizontal Oxz.

La section des portions convexes dans un plan orthogonal à l'axe longitudinal (Ox) peut ainsi être en forme de V, comme cela apparaît sur la figure 1c notamment. La crête 133 présente alors une largeur selon l'axe transversal (Oz) petite par rapport à la hauteur des parois inclinées 131, 132.

Alternativement, et de manière particulièrement avantageuse, la crête 133 peut être en forme de U (comme cela apparaît sur la figure 2c notamment), c'est-à-dire présenter un plateau joignant les parois inclinées 131, 132 de la portion convexe 13. Dans cette situation, la largeur selon l'axe transversal (Oz) du plateau est semblable à la hauteur des parois inclinées 131, 132. Une telle configuration permet à la goupille 1 de présenter une rigidité significativement plus importante que dans lorsque la portion convexe est en forme de V.

Quelle que soit la forme des portions convexes 13, une portion concave relie les parois intérieures 131 de chaque portion convexe 13 par une surface centrale 14 sensiblement plate. Cette surface centrale 14 s'étend selon l'axe longitudinal (Ox), dans le plan horizontal Oxz.

Cette forme particulièrement avantageuse du corps métallique 10 permet une grande adaptation de la goupille 1 en rapport avec les tolérances selon l'axe vertical (Oy). En particulier lorsque le corps 10 est en acier trempé, la forme des portions 13, 14 présente l'avantage d'être à la fois résistante aux efforts selon l'axe transversal (Oz) et d'être suffisamment souple pour permettre une compression de la goupille 1.

Selon une configuration particulièrement avantageuse, chaque paroi extérieure 132 peut se poursuivre, selon l'axe transversal (Oz), par une aile 15 sensiblement parallèle à la surface centrale 14, c'est-à-dire dans le plan horizontal Oxz.

Au moins une aile 15 peut avantageusement présenter un épaulement 151 dépassant selon l'axe transversal (Oz). Un tel épaulement, plus large que l'ouverture aménagée dans le rail, permet de former une butée contre l'ouverture et de constituer un point d'arrêt de la goupille lors de son insertion, comme cela sera décrit plus en détail dans la suite de cette description.

Revenant à la description des figures la à 1d et 2a à 2d, au moins une crête 13 présente sur sa face inférieure 102 une lame saillante 11 obtenue par découpage et pliage du corps métallique 10 selon l'axe longitudinal (Ox). Comme cela sera décrit ultérieurement plus en détail, une telle lame 11 est conçue pour griffer chaque élément traversé par la goupille 1 lors de son insertion afin de s'y ancrer, permettant à la fois d'éviter le glissement de la goupille 1 et d'assurer le maintien d'un contact électrique entre la goupille 1 et chaque élément.

Préférentiellement, la goupille 1 peut comprendre au moins une lame saillante 11 sur la crête 133 de chaque portion convexe 13.

La goupille 1 peut notamment comprendre deux lames saillantes 11 alignées selon l'axe longitudinal (Ox) sur la crête 133 de chaque portion convexe 13.

Alternativement, la goupille 1 peut comprendre exactement une lame saillante 11 sur la crête 133 de chaque portion convexe 13. Dans cette situation, les lames saillantes peuvent être décalées l'une par rapport à l'autre selon l'axe longitudinal (Ox) .

Dans la situation où chaque crête 133 présente un plateau, on peut avantageusement prévoir que chaque lame saillante 11 soit découpée dans une partie seulement de la largeur selon un axe transversal (Oz) du plateau.

L'utilité de telles configurations sera décrite dans la suite de cette description.

Quelle que soit la configuration des lames 11, la goupille 1 comprend également au moins un organe de blocage 12, dont deux modes de mise en œuvre particuliers sont décrits ci-dessous, respectivement en référence aux figures la à 1d et 2a à 2d. Un tel organe de blocage 12 permet de former une butée d'extraction lorsque la goupille 1 est en position d'assemblage.

Selon un premier mode de mise en œuvre, représenté sur les figures la à 1d, l'organe de blocage 12 est formé d'une arête 12 saillante à la face supérieure, obtenue par découpage et pliage du corps métallique 10 selon l'axe transversal (Oz) orthogonal à l'axe longitudinal (Ox). L'arête est ainsi ouverte en regard de la seconde extrémité 104.

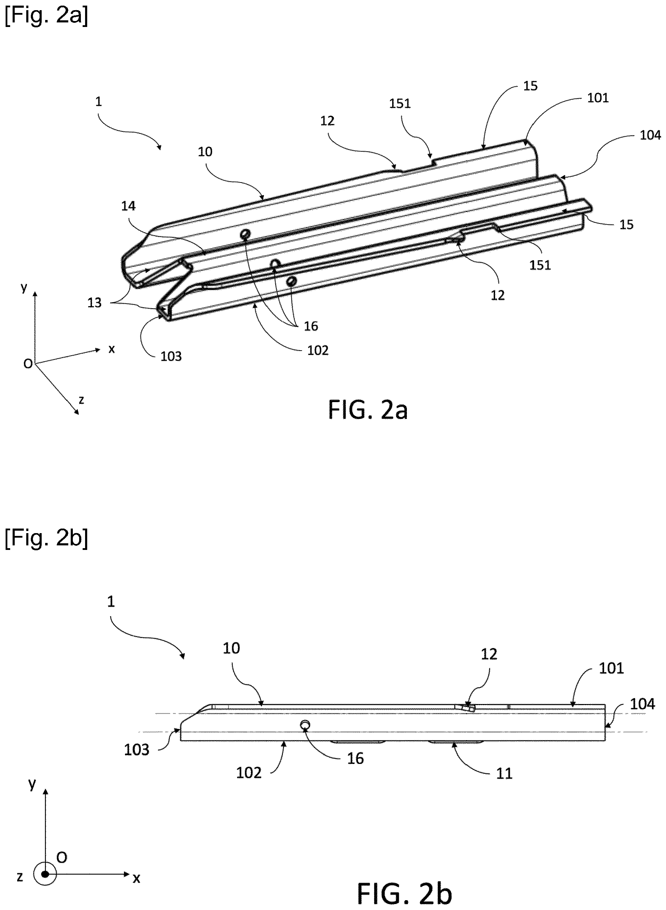

Selon un deuxième mode de mise en œuvre, représenté sur les figures 2a à 2d, l'organe de blocage 12 est formé par un ergot s'étendant vers l'extérieur selon l'axe transversal (Oz).

Avantageusement, l'ergot peut être légèrement replié vers la face inférieure 102 afin de faciliter l'insertion de la goupille à travers l'ouverture du rail.

Quel que soit le mode de mise en œuvre de l'invention, lorsque la goupille 1 comprend deux ailes 15, la goupille 1 peut comprendre un organe de blocage sur chaque aile 15. Afin que chaque arête 12 puisse assurer son rôle de butée lorsque la goupille 1 est en position d'assemblage, les organes de blocage 12 sont alignés selon l'axe transversal (Oz).

### Utilisation de la goupille

D'une manière générale, une telle goupille 1 peut être utilisée pour retenir deux éléments 301, 311 dans un rail 20 en U.

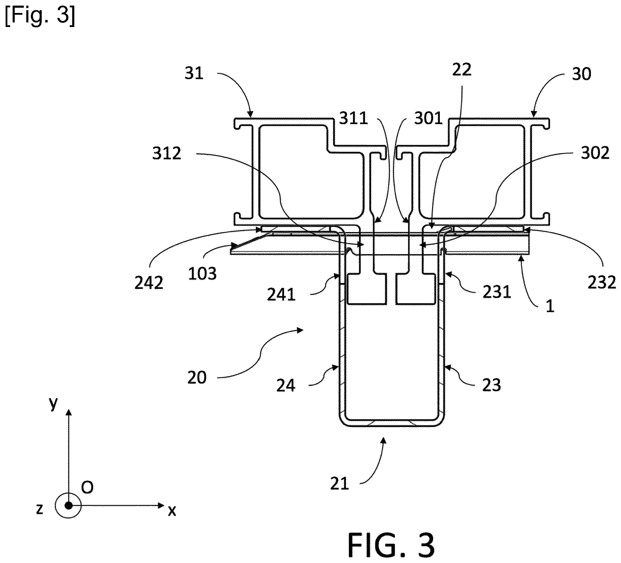

La figure 3 représente une vue en coupe d'un assemblage utilisant une goupille 1 conforme à l'invention.

On a représenté sur cette figure un premier et un deuxième éléments 301, 311, un rail 20 et une goupille 1 en position d'assemblage. A nouveau, un repère Oxyz orthogonal a été représenté, de telle sorte que le plan Oxz soit horizontal et que l'axe (Ox) corresponde à la direction longitudinale d'insertion de la goupille 1.

Le rail 20 s'étend selon l'axe transversal (Oz) et présente un côté horizontal fermé 21, un côté horizontal ouvert 22 pour recevoir les éléments plans 301, 311 dans une position de retenue, ainsi que deux parois latérales 23, 24, disposées respectivement dans le plan Oyz. Chaque paroi latérale 23, 24 est prolongée, à l'opposé du côté fermé 21, par une paroi horizontale 232, 242, s'étendant vers l'extérieur du rail 20 dans le plan Oxz.

Chaque paroi latérale 23, 24 du rail 20 est percée d'une ouverture 231, 241 en vis-à-vis l'une de l'autre suivant l'axe longitudinal (Ox). Comme cela est également bien visible sur la figure 3, chaque ouverture 231, 241 s'étend en partie sur la paroi horizontale 232, 242.

Chaque élément 301, 311 représenté sur la figure 3, est un élément plan d'un cadre 30, 31, par exemple en aluminium, fixant un module photovoltaïque (non représenté sur la figure).

Chacun de ces éléments 301, 311 présente un passage traversant 302, 312 selon l'axe longitudinal (Ox), se trouvant en vis-à-vis des ouvertures 231, 241 lorsque l'élément 301, 311 est dans la position de retenue.

La position de retenue est définie pour les éléments 301, 311 comme étant la position dans laquelle ces éléments 301, 311 sont insérés dans le rail 20, leur cadre 30, 31 reposant sur les parois horizontales 232, 242. Leurs passages traversants 302, 312 se trouvent alors en vis-à-vis des ouvertures 231, 241 des parois latérales 23, 24 du rail 20.

On désigne par position d'assemblage la position dans laquelle la goupille 1 est insérée au travers des ouvertures 231, 241 et des passages traversants 302, 312, et l'organe ou les organes de blocage 12 a (ont) traversé la première ouverture 231 traversée par la goupille 1. L'insertion de la goupille 1 dans le rail 20 se fait selon l'axe longitudinal d'insertion (Ox), généralement dans le sens des x décroissants.

En utilisation, la goupille 1 est tout d'abord insérée par sa première extrémité 103 dans la première ouverture 231 de la première paroi latérale 23 du rail 20.

De manière pratique, afin de faciliter l'insertion de la goupille, il peut être plus aisé de l'insérer en oblique dans la première ouverture. A cet effet, et tel que cela est visible sur l'ensemble des figures, la première extrémité 103 de la goupille 1 peut présenter une forme biseautée. Cette forme biseauté peut être un biseau (comme sur la figure 1b) ou un chanfrein (comme sur la figure 2b). Le biseau ou le chanfrein est alors réalisé sur la première extrémité 103 dans le sens des x croissants et des y croissants, formant par exemple un angle de 30° ou 45°. Une telle forme permet d'insérer la goupille 1 en oblique dans la première ouverture 231 du rail 20, puis de la redresser au fur et à mesure de l'insertion, afin de guider plus aisément la goupille 1. Au besoin, l'insertion de la goupille 1 peut se faire à l'aide d'un marteau.

Avantageusement, la goupille 1 présente une largeur, selon l'axe transversal (Oz), légèrement supérieure à celle de l'ouverture 231, imposant une compression de la goupille 1 selon l'axe transversal (Oz) pour permettre son insertion. Une telle compression permet au corps 10 de la goupille 1 d'être en légère flexion contre le rail 20 et d'exercer une pression contre lui pour assurer le maintien de la goupille 1 dans le rail 20 lorsque la goupille 1, relâchée, est en position d'assemblage.

Poursuivant son insertion, la première extrémité 103 de la goupille 1 traverse ensuite les passages traversants 302, 312 du premier 301 puis du second 311 élément.

La goupille 1 présente une hauteur, selon l'axe vertical (Oy), légèrement supérieure à celle de chaque passage traversant 302, 312, imposant une flexion de la lame saillante 11 lors de son insertion à travers le passage traversant 302, 312. De la sorte, non seulement la lame saillante 11 va griffer chaque élément 301, 311 lors de son insertion dans son passage traversant 302, 312, permettant de s'y ancrer, mais la lame 11 va également demeurer en légère flexion contre chaque élément 301, 311 après l'insertion de la goupille 1, permettant d'assurer le maintien d'un contact électrique avec les deux éléments 301, 311 lorsque la goupille 1 est en position d'assemblage.

La présence avantageuse de deux lames saillantes 11 sur la crête 133 de chaque portion convexe 13 de la goupille 1 permet à chaque lame d'une crête de griffer un élément différent lorsque la goupille 1 est en position d'assemblage. De la sorte, la flexion de chaque lame 11 est indépendante et permet d'optimiser le maintien du contact électrique entre chaque élément 301, 311 et la goupille 1, quel que soit le mouvement de l'un ou l'autre des éléments 301, 311.

Le même avantage existe lorsque la goupille 1 comprend exactement une lame saillante 11 sur la crête 133 de chaque portion convexe 13, avec des lames décalées l'une par rapport à l'autre selon l'axe longitudinal (Ox). Chaque lame 11 va griffer un élément différent lorsque la goupille est en position d'assemblage. La Demanderesse a remarqué que cette configuration particulière permet d'améliorer la rigidité de la goupille 1 sans dégrader les fonctions de contact électrique et de maintien de la goupille 1.

Enfin, la caractéristique avantageuse selon laquelle chaque lame saillante 11 est découpée dans une partie seulement de la largeur selon un axe transversal (Oz) du plateau permet, lorsque la goupille 1 est en position d'assemblage, d'assurer à la fois un contact linéique, avec la lame saillante 11, et un contact plan, avec le reste du plateau, entre la goupille 1 et l'élément 301, 311, assurant une reprise d'effort.

Quelle que soit le nombre et la répartition des lames 11, la distance entre la première extrémité 103 et la lame 11 est supérieure à la largeur du rail 20 selon l'axe longitudinal (Ox), afin que la première extrémité 103 ressorte du rail 20 avant que la lame 11 ne s'engage dans le premier passage traversant 302. De la sorte, l'insertion de la goupille 1 est facilitée. En effet, la griffure de la lame 11 contre chaque élément 301, 311, souhaitée, nécessite un effort supplémentaire pour insérer la goupille. Il apparaît donc préférable que la goupille 1 ressorte du rail 20, assurant ainsi le maintien de l'assemblage, avant que l'effort principal d'insertion des lames 11 dans les passages traversants 302, 312 ne soit requis.

Les dimensions relatives de la goupille 1 et du passage traversant 302, 312 permettent, grâce à la flexibilité de la lame 11, à la fois d'insérer la goupille 1 à travers le passage traversant 302, 312 sans exercer un effort trop important sur la lame 11 au cours de l'insertion, et de maintenir solidaires la goupille 1 et les éléments 301, 311 tout en assurant un contact électrique continu entre eux.

En effet, même s'il existe un jeu entre la goupille 1 et l'un des éléments 301, 311, rendu nécessaire pour permettre l'insertion de la goupille 1 à travers le passage traversant 302, 312, la flexibilité de la lame 11 permet d'assurer un contact, voire même de maintenir l'élément 301, 311 dans une position fixe.

La goupille 1 est enfin insérée jusqu'à ce que l'organe de blocage 12 ait traversé l'ouverture 231 de la première paroi latérale 23 du rail 20. La goupille 1 se trouve alors dans la position d'assemblage.

Dans le premier mode de mise en œuvre, lorsque l'organe de blocage 12 est formé d'une arête obtenue par découpage et pliage selon l'axe transversal (Oz), l'élasticité du corps 10 de la goupille 1 permet à l'arête saillante 12 de fléchir lors de son passage dans l'ouverture 231, puis de se détendre une fois l'ouverture 231 traversée. L'arête 12 agit dès lors comme une butée d'extraction contre la première paroi horizontale 232 du rail 20 empêchant le retrait de la goupille 1 dans le sens inverse à son insertion. Le fait que l'effort de butée de l'arête 12 contre le rail 20 s'exerce sur la partie horizontale 232 du rail 20, tangente à l'effort de butée, renforce cette butée.

Dans le deuxième mode de mise en œuvre, lorsque l'organe de blocage est formé d'un ergot, l'élasticité du corps 10 de la goupille 1 permet également à l'ergot de se plier légèrement, notamment lorsque celui-ci est légèrement replié vers la partie inférieure, lors de son passage à travers la première ouverture 231. Une fois l'ouverture 231 traversée, l'ergot agit comme une butée d'extraction contre la paroi latérale 23 du rail 20, empêchant le retrait de la goupille dans le sens inverse à son insertion.

La présence avantageuse d'un épaulement 151, qui permet à la goupille 1 de présenter une largeur plus importante que la première ouverture 231 au niveau de l'épaulement, même lorsque la goupille est mise en compression suivant l'axe transversal (Oz), permet d'empêcher le désengagement de la goupille 1 par glissement selon l'axe longitudinal (Ox), dans le sens des x décroissants.

L'épaulement 151 permet en outre de constituer un point d'arrêt de l'insertion de la goupille 1, indiquant que la goupille 1 se trouve bien en position d'assemblage. Pour ce faire, l'épaulement 151 est situé entre la seconde extrémité 104 et l'organe ou les organes de blocage 12. De la sorte, lors de l'insertion de la goupille 1, l'organe de blocage 12 traverse l'ouverture 231 avant que l'épaulement 151 ne vienne former butée contre la paroi latérale 23 du rail 20.

Ainsi, lorsqu'elle est en position d'assemblage, la goupille 1 est bloquée contre le glissement dans les deux sens selon l'axe longitudinal (Ox).

Préférentiellement, afin d'éviter tout jeu selon l'axe longitudinal (Ox) lorsque la goupille 1 est en position d'assemblage, la distance entre l'organe de blocage 12 et l'épaulement 151 est égale, ou très légèrement supérieure, à l'épaisseur de la première paroi latérale 23.

Pour empêcher le désengagement de la goupille selon l'axe longitudinal (Ox), la goupille 1 peut alternativement ou en complément comprendre un cran anti-retour (non représenté sur les figures), qui peut être défini par un fond, dans lequel se place le contour de l'ouverture 231, et de deux butées qui limiteront le déplacement de ce contour. Mais l'invention n'est nullement limitée à un tel cran, et peut comprendre tout moyen permettant l'insertion de la goupille jusqu'à la position d'assemblage et d'empêcher son désengagement. Ce cran anti-retour peut être disposé sur la face inférieure 102 ou sur la face supérieure 101. Préférentiellement, le cran anti-retour est disposé le plus près possible de la seconde extrémité, de préférence entre la lame 11 et la deuxième extrémité 104 selon l'axe longitudinal (Ox), afin de limiter le nombre d'éléments que le cran doit traverser lors de l'insertion de la goupille 1, qui augmente nécessairement l'effort à fournir pour insérer la goupille 1.

Dans les cas où les éléments 301, 311 subiraient un effort de traction tendant à les extraire du rail 20 par le côté horizontal ouvert 22, c'est-à-dire selon l'axe vertical (Oy) dans le sens des y croissants, leur déplacement serait limité à leur jeu avec la goupille 1, la goupille 1 en position d'assemblage les maintenant fixés. La goupille 1 demeure quant à elle bloquée selon l'axe vertical (Oy) par butée contre les parois latérales 23, 24 du rail 20. Lors de l'effort d'arrachement des éléments 301, 311, la flexibilité de la lame 11 assure, par son relâchement, la continuité du contact électrique entre les éléments 301, 311 et la goupille 1.

Le contact électrique entre la goupille 1 et le rail 20 est quant à lui assuré par la compression de la goupille 1 dans l'ouverture 231 du rail 20, ainsi que par son contact avec la paroi horizontale 232 du rail 20. Un tel contact peut être soit continu (comme sur la figure 3), ce qui est préférable, soit assuré par la butée de la goupille 1 contre cette paroi 24 lors de l'arrachement des éléments 30.

Pour ce qui est de la compression des éléments 301, 311, c'est-à-dire l'application d'un effort selon l'axe vertical (Oy), dans le sens des y décroissants, et comme cela est bien visible sur la figure 3, les cadres 30, 31 reposent directement sur le rail 20 en position de retenue. Ils ne peuvent dès lors exercer sur la goupille 1 un effort de compression plus intense que la compression décrite précédemment, due au jeu entre les éléments 301, 311 et la goupille 1.

Une goupille 1 conforme à l'invention permet ainsi de fixer deux éléments 301, 311 à un rail 20 de manière simple et solide, tout en assurant un contact électrique continu entre chaque élément 301, 311 et le rail 20 sans que ce contact électrique ne soit susceptible d'être interrompu, quelles que soient l'intensité et la durée des efforts de traction exercés sur les éléments 301, 311.

Bien entendu l'invention n'est pas limitée aux modes de mise en œuvre décrits et on peut y apporter des variantes de réalisation sans sortir du cadre de l'invention tel que défini par les revendications.

En particulier, bien que l'on n'ait décrit que des organes de retenue obtenus de manière monobloc par simple découpage et pliage du corps métallique, il est possible d'envisager tout autre organe de retenue permettant d'empêcher l'extraction de la goupille une fois que celle-ci est en position d'assemblage.

Il est notamment possible d'envisager que chaque paroi soit percée d'un trou 16 en vis-à-vis les uns des autres selon l'axe transversal (Oz), comme cela est représenté sur les figures 2a à 2d. Les trous 16 sont alors disposés entre la première extrémité 103 et la lame saillante 11. L'organe de blocage 12 peut alors comprendre, en complément ou en substitution des organes de blocage monobloc décrits précédemment, un organe de blocage externe, comprenant une tige apte à traverser l'ensemble des trous 16. Par exemple, l'organe de blocage externe peut être une goupille beta (non représentée).

Dans cette situation, l'utilisation de la goupille est légèrement modifiée. La position d'assemblage n'est plus définie lorsque l'organe de blocage a traversé l'ouverture 231 de la première paroi latérale 23 du rail 20, mais lorsque les trous 16 ont traversé l'ouverture 241 de la deuxième paroi latérale 24 du rail 20, la lame saillante 11 ayant traversé la première ouverture 231. L'organe de blocage externe 12 est alors inséré dans les trous 16 pour empêcher l'extraction de la goupille 1.

## Revendications

1. Goupille (1) comportant un corps métallique (10) s'étendant selon un axe longitudinal (Ox) d'insertion et présentant une première (103) et une seconde extrémité (104) selon l'axe longitudinal (Ox), une face supérieure (101) et une face inférieure (102) opposée à la face supérieure (101), la goupille (1) comprenant :
- deux portions convexes (13) présentant chacune une paroi intérieure inclinée (131) et une paroi extérieure inclinée (132), les parois inclinées (131, 132) de chaque portion convexe (13) formant une crête (133) et s'étendant selon l'axe longitudinal (Ox), au moins une crête (133) présentant sur sa face inférieure une lame saillante (11) obtenue par découpage et pliage du corps métallique selon l'axe longitudinal (Ox) ;
- une portion concave reliant les parois intérieures (131) de chaque portion convexe (13) par une surface centrale (14) ;
- au moins un organe de blocage (12).

2. Goupille (1) selon la revendication précédente dans laquelle chaque paroi extérieure (132) se poursuit selon un axe transversal (Oz) par une aile (15) parallèle à la surface centrale (14).

3. Goupille (1) selon la revendication précédente, dans laquelle au moins une aile (15) présente un épaulement (151) selon l'axe transversal (Oz), l'épaulement (151) étant situé entre la seconde extrémité (104) et l'au moins un organe de blocage (12).

4. Goupille (1) selon l'une des revendications précédentes dans laquelle l'au moins un organe de blocage est formé d'une arête saillante (12) à la face supérieure, obtenue par découpage et pliage du corps métallique (10) selon un axe transversal (Oz).

5. Goupille selon l'une des revendications précédentes dans laquelle l'au moins un organe de blocage est formé par un ergot s'étendant vers l'extérieur selon un axe transversal (Oz) .

6. Goupille selon la revendication précédente dans laquelle l'ergot est replié vers la face inférieure.

7. Goupille (1) selon l'une des revendications 2 à 6 comprenant un organe de blocage sur chaque aile, les organes de blocage étant alignés sur un axe transversal (Oz).

8. Goupille (1) selon l'une des revendications précédentes comprenant au moins une lame saillante (11) sur la crête (133) de chaque portion convexe (13).

9. Goupille (1) selon la revendication précédente comprenant deux lames saillantes (11) alignées selon l'axe longitudinal (Ox) sur la crête (133) de chaque portion convexe (13).

10. Goupille (1) selon la revendication 8 comprenant exactement une lame saillante (11) sur la crête (133) de chaque portion convexe (13), les lames saillantes (11) étant décalées l'une par rapport à l'autre selon l'axe longitudinal (Ox).

11. Goupille (1) selon l'une des revendications 8 à 10 dans laquelle chaque crête (133) présente un plateau, chaque lame saillante (11) étant découpée dans une partie seulement de la largeur selon un axe transversal (Oz) du plateau.

12. Goupille (1) selon l'une des revendications précédentes, la première extrémité (103) présentant une forme biseautée.

13. Goupille selon l'une des revendications précédentes comprenant un cran anti-retour formé sur la face inférieure (102) ou sur la face supérieure (101).

14. Goupille (1) selon l'une des revendications précédentes dans laquelle le corps métallique (10) est constitué d'acier trempé.

15. Goupille (1) selon l'une des revendications précédentes dans laquelle chaque paroi est percée d'un trou en vis-à-vis les uns des autres selon un axe transversal, les trous étant disposés entre la première extrémité (103) et la au moins une lame saillante (11), l'au moins un organe de blocage comprenant une tige apte à traverser l'ensemble des trous.

16. Utilisation d'une goupille (1) selon l'une des revendications 1 à 14 pour retenir deux éléments (301, 311) dans un rail (20) en U s'étendant selon un axe transversal (Oz), le rail (20) présentant un côté horizontal fermé (21), un côté horizontal ouvert (22) pour recevoir les éléments (301, 311) dans une position de retenue et deux parois latérales (23, 24) prolongées à l'opposé du côté fermé (21) par une paroi horizontale (232, 242) s'étendant vers l'extérieur du rail (20) suivant l'axe longitudinal (Ox), chaque paroi latérale (23, 24) étant percée d'une ouverture (231, 241) en vis-à-vis l'une de l'autre suivant l'axe longitudinal (Ox), chaque ouverture (231, 241) s'étendant en partie sur la paroi horizontale (232, 242), chaque élément (301, 311) présentant un passage traversant (302, 312) se trouvant en vis-à-vis des ouvertures (231, 241) lorsque l'élément (301, 311) est dans la position de retenue, de telle sorte que la goupille (1) soit insérée suivant l'axe longitudinal (Ox) dans les ouvertures (231, 241) et passages traversants (302, 312) jusqu'à une position d'assemblage dans laquelle la au moins une lame saillante (11) et l'au moins un organe de blocage (12) aient traversé une première ouverture (231) du rail (20), la au moins une lame saillante (11) entrant en contact forcé avec les éléments (301, 311), l'au moins un organe de blocage (12) formant une butée contre le rail (20) pour empêcher l'extraction de la goupille (1).

17. Utilisation d'une goupille (1) selon la revendication 15 pour retenir deux éléments (301, 311) dans un rail (20) en U s'étendant selon un axe transversal (Oz), le rail (20) présentant un côté horizontal fermé (21), un côté horizontal ouvert (22) pour recevoir les éléments (301, 311) dans une position de retenue et deux parois latérales (23, 24) prolongées à l'opposé du côté fermé (21) par une paroi horizontale (232, 242) s'étendant vers l'extérieur du rail (20) suivant l'axe longitudinal (Ox), chaque paroi latérale (23, 24) étant percée d'une ouverture (231, 241) en vis-à-vis l'une de l'autre suivant l'axe longitudinal (Ox), chaque ouverture (231, 241) s'étendant en partie sur la paroi horizontale (232, 242), chaque élément (301, 311) présentant un passage traversant (302, 312) se trouvant en vis-à-vis des ouvertures (231, 241) lorsque l'élément (301, 311) est dans la position de retenue, de telle sorte que la goupille (1) soit insérée suivant l'axe longitudinal (Ox) dans les ouvertures (231, 241) et passages traversants (302, 312) jusqu'à une position d'assemblage dans laquelle la au moins une lame saillante (11) et les trous aient traversé une seconde ouverture (241) du rail (20), la au moins une lame saillante (11) entrant en contact forcé avec les éléments (301, 311), l'au moins un organe de blocage (12) étant inséré dans les trous pour empêcher l'extraction de la goupille (1).

## Patentansprüche

1. Stift (1), der einen Metallkörper (10), der sich gemäß einer Längsachse (Ox) zum Einführen erstreckt und ein erstes (103) und ein zweites Ende (104) gemäß der Längsachse (Ox) vorweist, eine obere Fläche (101) und eine untere Fläche (102) entgegengesetzt zu der oberen Fläche (101) aufweist, der Stift (1) umfassend:
- zwei konvexe Abschnitte (13), die jeweils eine geneigte Innenwand (131) und eine geneigte Außenwand (132) vorweisen, wobei die geneigten Wände (131, 132) jedes konvexen Abschnitts (13) einen Scheitel (133) ausbilden und sich gemäß der Längsachse (Ox) erstrecken, wobei mindestens ein Scheitel (133) an seiner unteren Fläche ein überstehendes Blatt (11) vorweist, das durch Abschneiden und Biegen des Metallkörpers gemäß der Längsachse (Ox) erhalten wird;
- einen konkaven Abschnitt, der die Innenwände (131) jedes konvexen Abschnitts (13) durch eine zentrale Oberfläche (14) verbindet;
- mindestens ein Verriegelungsmittel (12).

2. Stift (1) nach dem vorstehenden Anspruch, wobei sich jede Außenwand (132) gemäß einer Querachse (Oz) durch einen Flansch (15) parallel zu der zentralen Oberfläche (14) fortsetzt.

3. Stift (1) nach dem vorstehenden Anspruch, wobei mindestens ein Flansch (15) eine Schulter (151) gemäß der Querachse (Oz) vorweist, wobei die Schulter (151) zwischen dem zweiten Ende (104) und dem mindestens einen Verriegelungsmittel (12) gelegen ist.

4. Stift (1) nach einem der vorstehenden Ansprüche, wobei das mindestens eine Verriegelungsmittel aus einer überstehende Kante (12) an der oberen Fläche ausgebildet ist, die durch Abschneiden und Biegen des Metallkörpers (10) gemäß einer Querachse (Oz) erhalten wird.

5. Stift nach einem der vorstehenden Ansprüche, wobei das mindestens eine Verriegelungsmittel durch einen Vorsprung ausgebildet ist, der sich gemäß einer Querachse (Oz) in Richtung der Außenseite erstreckt.

6. Stift nach dem vorstehenden Anspruch, wobei der Vorsprung in Richtung der unteren Fläche umgebogen ist.

7. Stift (1) nach einem der Ansprüche 2 bis 6, umfassend ein Verriegelungsmittel an jedem Flansch, wobei die Verriegelungsmittel an einer Querachse (Oz) ausgerichtet sind.

8. Stift (1) nach einem der vorstehenden Ansprüche, umfassend mindestens ein überstehendes Blatt (11) an dem Scheitel (133) jedes konvexen Abschnitts (13).

9. Stift (1) nach dem vorstehenden Anspruch, umfassend zwei vorstehende Blätter (11), die gemäß der Längsachse (Ox) an dem Scheitel (133) jedes konvexen Abschnitts (13) ausgerichtet sind.

10. Stift (1) nach Anspruch 8, umfassend genau ein überstehendes Blatt (11) an dem Scheitel (133) jedes konvexen Abschnitts (13), wobei die überstehenden Blätter (11) relativ zueinander gemäß der Längsachse (Ox) versetzt sind.

11. Stift (1) nach einem der Ansprüche 8 bis 10, wobei jeder Scheitel (133) eine Platte vorweist, wobei jedes überstehende Blatt (11) nur in einem Teil der Breite gemäß einer Querachse (Oz) der Platte abgeschnitten ist.

12. Stift (1) nach einem der vorstehenden Ansprüche, wobei das erste Ende (103) eine abgeschrägte Form vorweist.

13. Stift nach einem der vorstehenden Ansprüche, umfassend eine Rücklaufrastkerbe, die auf der unteren Fläche (102) oder auf der oberen Fläche (101) ausgebildet ist.

14. Stift (1) nach einem der vorstehenden Ansprüche, wobei der Metallkörper (10) aus Vergütungsstahl besteht.

15. Stift (1) nach einem der vorstehenden Ansprüche, wobei jede Wand einander gemäß einer Querachse gegenüberliegend mit einem Loch durchbohrt ist, wobei die Löcher zwischen dem ersten Ende (103) und dem mindestens einen überstehenden Blatt (11) angeordnet sind, das mindestens eine Verriegelungsmittel umfassend eine Stange, die geeignet ist, um sämtliche Löcher zu durchdringen.

16. Verwendung eines Stifts (1) nach einem der Ansprüche 1 bis 14 zum Halten von zwei Elementen (301, 311) in einer U-förmigen Schiene (20), die sich gemäß einer Querachse (Oz) erstreckt, wobei die Schiene (20) eine geschlossene horizontale Seite (21), eine offene horizontale Seite (22) zum Aufnehmen der Elemente (301, 311) in einer Halteposition und zwei laterale Wände (23, 24) vorweist, die entgegengesetzt zu der geschlossenen Seite (21) durch eine horizontale Wand (232, 242) verlängert sind, die sich der Längsachse (Ox) folgend in Richtung der Außenseite der Schiene (20) erstreckt, wobei jede laterale Wand (23, 24) einander der Längsachse (Ox) folgend gegenüberliegend mit einer Öffnung (231, 241) durchbohrt ist, sich jede Öffnung (231, 241) teilweise an der horizontalen Wand (232, 242) erstreckt, jedes Element (301, 311) eine durchdringende Passage (302, 312) vorweist, die sich gegenüber den Öffnungen (231, 241) befindet, wenn das Element (301, 311) in der Halteposition ist, derart, dass der Stift (1) der Längsachse (Ox) folgend in die Öffnungen (231, 241) und die durchdringenden Passagen (302, 312) bis zu einer Montageposition eingeführt wird, in der das mindestens eine überstehende Blatt (11) und das mindestens eine Verriegelungsmittel (12) eine erste Öffnung (231) der Schiene (20) durchdrungen haben, wobei das mindestens eine überstehende Blatt (11) in eine erzwungene Berührung mit den Elementen (301, 311) eintritt, wobei das mindestens eine Verriegelungsmittel (12) zum Verhindern des Herausziehens des Stifts (1) einen Anschlag gegen die Schiene (20) ausbildet.

17. Verwendung eines Stifts (1) nach Anspruch 15 zum Halten von zwei Elementen (301, 311) in einer U-förmigen Schiene (20), die sich gemäß einer Querachse (Oz) erstreckt, wobei die Schiene (20) eine geschlossene horizontale Seite (21), eine offene horizontale Seite (22) zum Aufnehmen der Elemente (301, 311) in einer Halteposition und zwei laterale Wände (23, 24) vorweist, die entgegengesetzt zu der geschlossenen Seite (21) durch eine horizontale Wand (232, 242) verlängert sind, die sich der Längsachse (Ox) folgend in Richtung der Außenseite der Schiene (20) erstreckt, wobei jede laterale Wand (23, 24) einander der Längsachse (Ox) folgend gegenüberliegend mit einer Öffnung (231, 241) durchbohrt ist, sich jede Öffnung (231, 241) teilweise an der horizontalen Wand (232, 242) erstreckt, jedes Element (301, 311) eine durchdringende Passage (302, 312) vorweist, die sich gegenüber den Öffnungen (231, 241) befindet, wenn das Element (301, 311) in der Halteposition ist, derart, dass der Stift (1) der Längsachse (Ox) folgend in die Öffnungen (231, 241) und die durchdringenden Passagen (302, 312) bis zu einer Montageposition eingeführt wird, in der das mindestens eine überstehende Blatt (11) und die Löcher eine zweite Öffnung (241) der Schiene (20) durchdrungen haben, wobei das mindestens eine überstehende Blatt (11) in die erzwungene Berührung mit den Elementen (301, 311) eintritt, wobei das mindestens eine Verriegelungsmittel (12) zum Verhindern des Herausziehens des Stifts (1) in die Löcher eingeführt ist.

## Claims

1. Pin (1) comprising a metal body (10) extending along a longitudinal insertion axis (Ox) and having a first end (103) and a second end (104) along the longitudinal axis (Ox), and an upper face (101) and a lower face (102) opposite the upper face (101), the pin (1) comprising:
- two convex portions (13) each having an inclined inner wall (131) and an inclined outer wall (132), the inclined walls (131, 132) of each convex portion (13) forming a ridge (133) and extending along the longitudinal axis (Ox), at least one ridge (133) having on its lower face a protruding blade (11) obtained by cutting and folding the metal body along the longitudinal axis (Ox);
- a concave portion connecting the inner walls (131) of each convex portion (13) via a central surface (14);
- at least one blocking member (12).

2. Pin (1) according to the preceding claim, wherein each outer wall (132) continues along a transverse axis (Oz) by means of a wing (15) that is parallel to the central surface (14).

3. Pin (1) according to the preceding claim, wherein at least one wing (15) has a shoulder (151) along the transverse axis (Oz), the shoulder (151) being located between the second end (104) and the at least one blocking member (12).

4. Pin (1) according to any of the preceding claims, wherein the at least one blocking member is formed by a projecting rib (12) on the upper face, obtained by cutting and folding the metal body (10) along a transverse axis (Oz).

5. Pin according to any of the preceding claims, wherein the at least one blocking member is formed by a lug extending outwardly along a transverse axis (Oz).

6. Pin according to the preceding claim, wherein the lug is folded back toward the lower face.

7. Pin (1) according to any of claims 2 to 6, comprising a blocking member on each wing, the blocking members being aligned on a transverse axis (Oz).

8. Pin (1) according to any of the preceding claims, comprising at least one protruding blade (11) on the ridge (133) of each convex portion (13).

9. Pin (1) according to the preceding claim, comprising two protruding blades (11) aligned along the longitudinal axis (Ox) on the ridge (133) of each convex portion (13).

10. Pin (1) according to claim 8, comprising exactly one protruding blade (11) on the ridge (133) of each convex portion (13), the protruding blades (11) being offset with respect to one another along the longitudinal axis (Ox).

11. Pin (1) according to any of claims 8 to 10, wherein each ridge (133) has a plateau, each protruding blade (11) being cut in only part of the width along a transverse axis (Oz) of the plateau.

12. Pin (1) according to any of the preceding claims, the first end (103) having a beveled shape.

13. Pin according to any of the preceding claims, comprising a non-return notch formed on the lower face (102) or on the upper face (101).

14. Pin (1) according to any of the preceding claims, wherein the metal body (10) consists of tempered steel.

15. Pin (1) according to any of the preceding claims, wherein each wall has a hole, which holes face one another along a transverse axis and are arranged between the first end (103) and the at least one protruding blade (11), the at least one blocking member comprising a rod capable of passing through all the holes.

16. Use of a pin (1) according to any of claims 1 to 14 to retain two elements (301, 311) in a U-shaped rail (20) that extends along a transverse axis (Oz), the rail (20) having a closed horizontal side (21), an open horizontal side (22) for receiving the elements (301, 311) in a retaining position and two side walls (23, 24) that are extended opposite the closed side (21) by means of a horizontal wall (232, 242) extending outward from the rail (20) along the longitudinal axis (Ox), each side wall (23, 24) having an opening (231, 241), which openings (231, 241) face one another along the longitudinal axis (Ox) and each extend in part along the horizontal wall (232, 242), each element (301, 311) having a through-passage (302, 312) located opposite the openings (231, 241) when the element (301, 311) is in the retaining position, such that the pin (1) is inserted along the longitudinal axis (Ox) in the openings (231, 241) and through-passages (302, 312) into an assembly position in which the at least one protruding blade (11) and the at least one blocking member (12) have passed through a first opening (231) of the rail (20), the at least one protruding blade (11) coming into forced contact with the elements (301, 311), the at least one blocking member (12) forming a stop against the rail (20) to prevent removal of the pin (1).

17. Use of a pin (1) according to claim 15 to retain two elements (301, 311) in a U-shaped rail (20) that extends along a transverse axis (Oz), the rail (20) having a closed horizontal side (21), an open horizontal side (22) for receiving the elements (301, 311) in a retaining position and two side walls (23, 24) that are extended opposite the closed side (21) by means of a horizontal wall (232, 242) extending outward from the rail (20) along the longitudinal axis (Ox), each side wall (23, 24) having an opening (231, 241), which openings (231, 241) face one another along the longitudinal axis (Ox) and each extend in part along the horizontal wall (232, 242), each element (301, 311) having a through-passage (302, 312) located opposite the openings (231, 241) when the element (301, 311) is in the retaining position, such that the pin (1) is inserted along the longitudinal axis (Ox) in the openings (231, 241) and through-passages (302, 312) into an assembly position in which the at least one protruding blade (11) and the holes have passed through a second opening (241) of the rail (20), the at least one protruding blade (11) coming into forced contact with the elements (301, 311), the at least one blocking member (12) being inserted into the holes to prevent removal of the pin (1).
